# DEMANDE DE BREVET EUROPEEN

(11) **EP 2 444 559 A1**
(43) Date de publication de la demande: **25.04.2012**
(21) Numéro de dépôt: 10306140.4
(22) Date de dépôt: 19.10.2010
(51) Int. Cl.: E04B 1/32

(54) **Structure architecturale présentant une façade transparente harmonisée avec le mouvement de la Terre**

(71) Demandeur: Wasser, Eric, 67310 Cosswiller (FR)
(72) Inventeur: Wasser, Eric, 67310 Cosswiller (FR)
(74) Mandataire: Nuss, Laurent

(57) **Abrégé**

Une structure architecturale (1) comprenant un volume d'exploitation (2), caractérisée en ce qu'elle présente une première façade (3), essentiellement transparente aux rayons du Soleil, délimitant la face sud, si la structure architecturale (1) se trouve dans l'hémisphère nord, et inversement, d'un volume éclairé (4) faisant partie du volume d'exploitation (2), la forme de ladite première façade (3) s'inscrivant sensiblement dans la trace laissée par un segment imaginaire entre le Soleil et un premier point fixe par rapport à la Terre, lors d'un tour complet de la Terre sur elle-même, dit tour de référence.

## Description

La présente invention concerne le domaine de la conception et la réalisation de structures, en particulier de la construction de bâtiments et a pour objet une structure architecturale.

Dans un souci de réduire l'énergie nécessaire à l'exploitation d'une structure architecturale, il est souhaitable de tirer profit au maximum du rayonnement solaire. Ce rayonnement peut être, par exemple, utilisé pour l'éclairage ou pour le chauffage.

La demande FR-A-2 819 836 porte sur une construction solaire, présentant une façade vitrée conique traversée toute l'année par les rayons du Soleil de sorte à éclairer le volume qui se trouve derrière la façade vitrée. La partie supérieure de cette construction solaire est opaque et conique, de forme complémentaire à la façade vitrée, de sorte que la façade vitrée soit le vecteur essentiel d'éclairage solaire. Il est possible d'accumuler la chaleur apportée par le Soleil lors de la saison froide, et d'éviter une exposition excessive du volume intérieur lors de la saison chaude.

Néanmoins, cette construction présente les inconvénients de ne pas être aisément adaptable à un urbanisme majoritairement rectilinéaire, et de présenter une façade vitrée en porte à faux, ce qui crée un équilibre mécanique très différent d'une construction classique et pour lequel des solutions spécifiques sont nécessaires.

La présente invention a pour but de pallier au moins une partie et préférentiellement tous ces inconvénients en proposant une structure architecturale nécessitant peu, voire aucun apport énergétique, notamment dans laquelle la façade vitrée est combinée à un ensemble stable, essentiellement rectilinéaire, et où la surface exploitable est maximisée.

A cet effet, l'invention a pour objet une structure architecturale comprenant un volume d'exploitation et qui présente une première façade, essentiellement transparente aux rayons du Soleil, délimitant la face sud, si la structure architecturale se trouve dans l'hémisphère nord, et inversement, d'un volume éclairé faisant partie du volume d'exploitation, la forme de ladite première façade s'inscrivant sensiblement dans la trace laissée par un segment imaginaire entre le Soleil et un premier point fixe par rapport à la Terre, lors d'un tour complet de la Terre sur elle-même, dit tour de référence.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une structure architecturale selon l'invention, munie d'un toit plat ;
- la figure 2 montre une structure architecturale selon l'invention, pour laquelle les parois latérales sont planes et le toit oblique ;
- la figure 3 montre une structure architecturale selon l'invention où le sommet du cône dans lequel s'inscrit la façade vitrée est sous le niveau du sol ;
- la figure 4 montre une structure architecturale selon l'invention munie de poteaux extérieurs ;
- la figure 5 montre une structure architecturale selon l'invention qui présente un élément stabilisant intérieur ;
- la figure 6 montre une structure architecturale selon l'invention qui consiste en un hall présentant au moins une façade vitrée, et
- les figures 7 à 9 montrent chacune une structure architecturale selon l'invention, qui consiste en une maison d'habitation.

L'invention a pour objet une structure architecturale 1 comprenant un volume d'exploitation 2. Ce volume d'exploitation 2 est utilisé pour la fonction de la structure architecturale 1. Ainsi, il peut s'agir d'une maison d'habitation, d'un bâtiment de stockage, d'un local commercial, ou autre. Selon l'invention, cette structure architecturale 1 présente une première façade 3, essentiellement transparente aux rayons du Soleil, délimitant la face sud, si la structure architecturale 1 se trouve dans l'hémisphère nord, et inversement, d'un volume éclairé 4 faisant partie du volume d'exploitation 2, la forme de ladite première façade 3 s'inscrivant sensiblement dans la trace laissée par un segment imaginaire entre le Soleil et un premier point fixe par rapport à la Terre, lors d'un tour complet de la Terre sur elle-même, dit tour de référence.

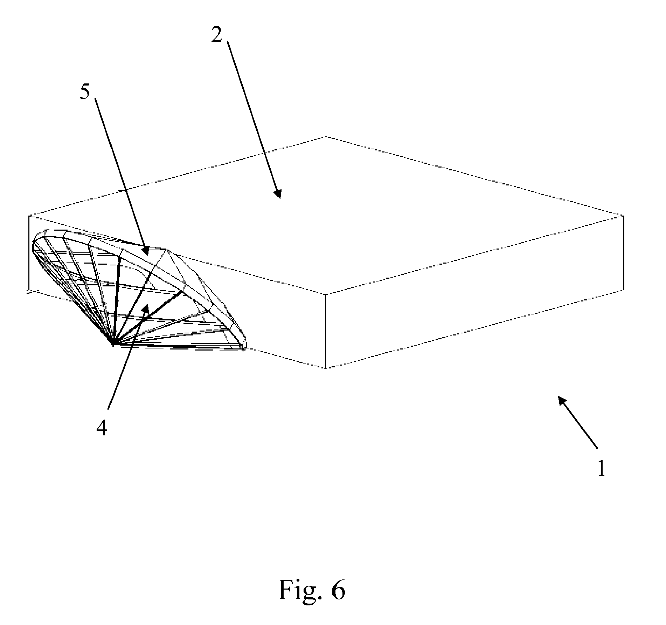

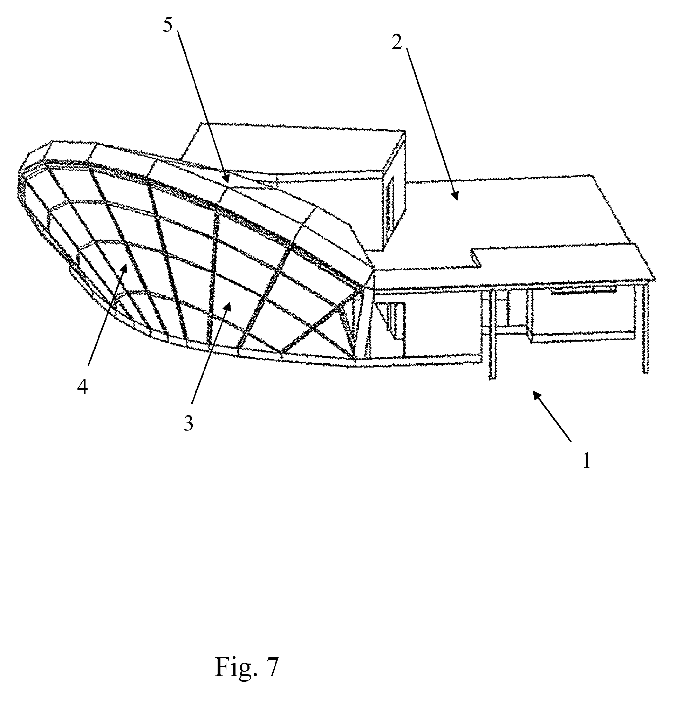

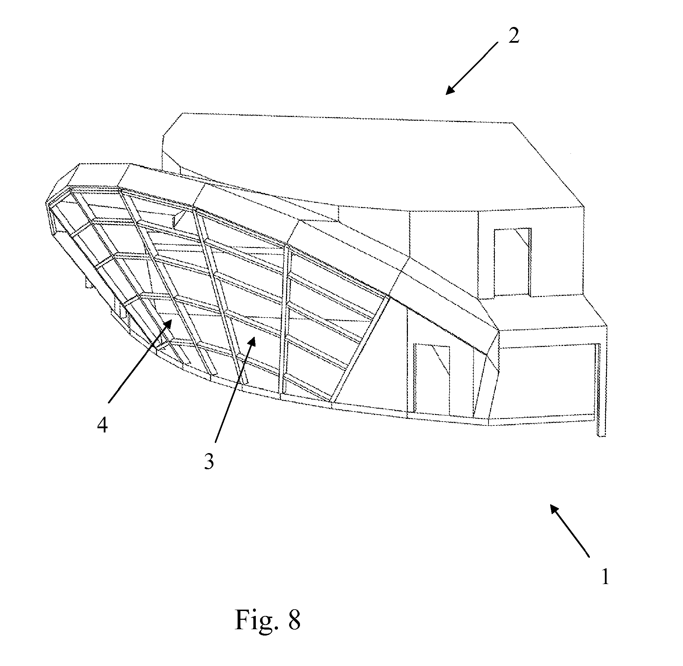

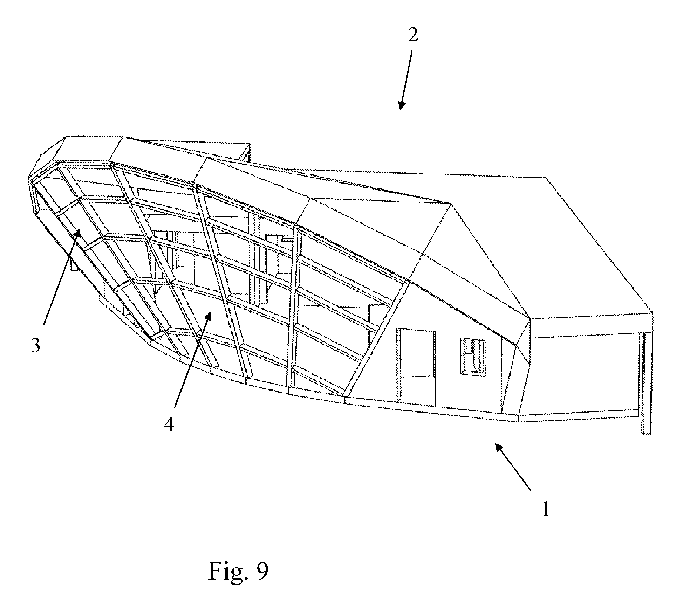

Le volume d'exploitation 2 comprend donc un volume éclairé 4, délimité par la forme gauche de la première façade 3, le reste du volume d'exploitation 2 pouvant être rectilinéaire, comme le montrent les figures 6 à 9, c'est-à-dire délimité par des parois planes, verticales ou horizontales, la portion du volume d'exploitation 2 complémentaire au volume éclairé 4 étant donc adapté à un environnement architectural linéaire ou un urbanisme essentiellement rectilinéaire, la surface au sol de cette partie étant, en outre, intégralement génératrice de volume habitable. Par exemple, la partie du volume d'exploitation 2 complémentaire au volume éclairé 4 peut être un parallélépipède rectangle formant un hall de stockage à un niveau, comme le montre la figure 6, ou encore une surface d'habitation à un niveau, comme le montre la figure 8, voire à deux niveaux, comme dans les figures 7 et 9.

Cette première façade 3 délimite donc au moins de façon géométrique une partie du volume éclairé 4 et évite une circulation d'air entre le volume éclairé 4 et l'extérieur. Dans le cas d'une maison d'habitation, ou, plus généralement, d'une exploitation comprenant des planchers, la première façade 3 délimite donc au moins en partie les planchers. Bien sûr, des structures telles que des balcons s'étendant au-delà de la première façade 3 peuvent être envisagés.

Si la structure architecturale 1 est aménagée dans l'hémisphère nord, la première façade 3 délimite le volume éclairé 4 au sud, et, si la structure architecturale 1 se trouve dans l'hémisphère sud, la première façade 3 délimite le volume éclairé 4 au nord. La première façade 3 se situe donc, pour une structure architecturale 1 construite dans l'hémisphère nord, au sud du volume éclairé 4, et, dans l'hémisphère sud, au nord de ce dernier. Ainsi, la première façade 3 est la façade du volume éclairé 4 qui est la plus exposée aux rayons de Soleil.

La première façade 3, essentiellement transparente, peut être une façade entièrement vitrée, ou seulement partiellement. Ces éventuelles vitres peuvent être teintées, ou se teinter au Soleil, par exemple.

La première façade 3 s'inscrit dans la trace laissée par un segment imaginaire entre le premier point fixe et le Soleil. Comme l'axe de la rotation de la Terre sur elle-même n'est pas perpendiculaire au plan dans lequel elle tourne autour du Soleil, la trace laissée, au cours d'une rotation de la Terre sur elle-même, par ce segment imaginaire définit approximativement un cône, dont le sommet est ledit premier point fixe, ou, lorsque la rotation de la Terre correspond aux équinoxes, un plan, dit plan d'équinoxe. Le cône tracé lors du solstice d'été, correspondant, pour une construction dans l'hémisphère nord, au solstice ayant lieu aux alentours du 21 juin, et, pour une construction dans l'hémisphère sud, au solstice ayant lieu aux alentours du 21 décembre, est nommé cône du solstice d'été. Le cône tracé lors du solstice d'hiver, correspondant, pour une construction dans l'hémisphère nord, au solstice ayant lieu aux alentours du 21 décembre, et, pour une construction dans l'hémisphère sud, au solstice ayant lieu aux alentours du 21 juin, est nommé cône du solstice d'hiver. Les équinoxes sont les rotations de la Terre lors desquelles, en tout point de la Terre, la durée du jour et de la nuit sont les mêmes, et sont autant séparés dans le temps du solstice d'été et du solstice d'hiver les plus proches. Lors des équinoxes, la trace d'un segment entre le premier point fixe et le Soleil est un plan, nommé plan d'équinoxe.

L'angle que forme l'axe de ce cône, ou, le cas échéant, l'axe perpendiculaire au plan d'équinoxe, par rapport à un plan horizontal sur Terre, dépend de la latitude à laquelle se trouve le premier point fixe. Pour une latitude de 0 degrés, l'axe sera horizontal ; pour une latitude de 20°, cet axe présentera un angle de 20° par rapport à l'horizontale. De façon générale, le décalage angulaire entre cet axe et l'horizontale correspond à la latitude du premier point fixe. Cet axe est orienté de sorte que le cône du solstice d'été s'ouvre vers le haut. Un plan imaginaire passant à la fois par cet axe et par le Soleil lorsqu'il est à son zénith, c'est-à-dire la position du Soleil la plus haute dans le ciel lors du trajet qu'il y parcourt en un seul jour, est vertical sur Terre.

En dehors des jours d'équinoxe, l'angle d'ouverture de ce cône, c'est-à-dire l'angle entre l'axe du cône et l'une de ses génératrices, dépend du trajet que suit le Soleil dans le ciel. En considérant uniquement la position du Soleil au zénith, c'est lors du solstice d'été que le Soleil est le plus haut dans le ciel de toute l'année, et lors du solstice d'hiver que le Soleil est le plus bas. L'angle d'ouverture du cône que forme la trace laissée par ce segment pendant une rotation de la Terre dépend donc du jour de l'année considéré. Il convient de noter que dans l'hémisphère nord, le Soleil d'hiver se lève au sud-est et se couche au sud-ouest, alors que le Soleil d'été se lève au nord-est et se couche au nord-ouest. Dans l'hémisphère sud, le Soleil d'hiver se lève au nord-est et se couche au nord-ouest, alors que le Soleil d'été se lève au sud-est et se couche au sud-ouest.

Ainsi, pour une localisation dans l'hémisphère nord, si le tour de référence a lieu dans une période entre deux équinoxes séparés par le solstice d'été, la trace est un cône qui s'ouvre vers le nord, alors que pour un tour de référence ayant lieu dans une période entre deux équinoxes séparés par le solstice d'hiver, la trace est un cône qui s'ouvre vers le sud. En outre, comme déjà mentionné, le cône s'ouvre vers le haut, avec un angle par rapport à l'horizontal qui dépend de la latitude du premier point fixe.

Du fait de la symétrie de la rotation de la Terre autour du Soleil, le cône du solstice d'été est symétrique au cône du solstice d'hiver par rapport au plan d'équinoxe. Ainsi, à partir du solstice d'été, l'angle du cône augmente au fil des jours, jusqu'à l'équinoxe, lors duquel la trace forme, non plus un cône, mais le plan d'équinoxe. A partir de cet équinoxe, la trace reprend la forme d'un cône dont l'angle diminue au fil des jours, jusqu'au solstice d'hiver, symétriquement à l'évolution précédente ayant eu lieu du solstice d'été jusqu'à l'équinoxe. La trace laissée par le segment imaginaire lors d'un seul tour de rotation de la Terre sur elle-même n'apparaît donc pas être rigoureusement un cône, puisque ces ouverture et fermeture successives ont lieu en continu. La section de la trace dans un plan parallèle au plan d'équinoxe est plutôt assimilable à une spirale. Néanmoins, compte tenu de l'échelle et afin de faciliter la compréhension, il est fait référence dans ce document à la forme d'un cône.

La première façade 3 s'inscrit donc sensiblement dans cette trace, laissée par un segment imaginaire entre le Soleil et le premier point fixe, lors d'un tour de la Terre sur elle-même, dit tour de référence. La première façade 3 ne sera donc traversée par aucun rayon du Soleil lorsqu'elle répètera ce tour de référence.

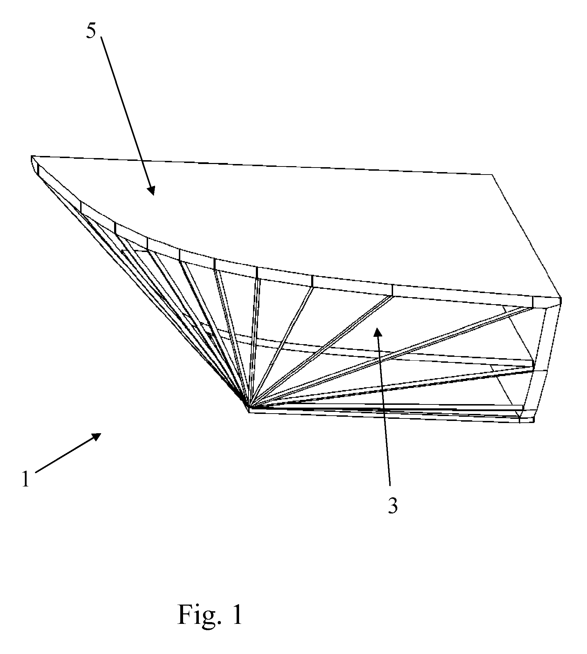

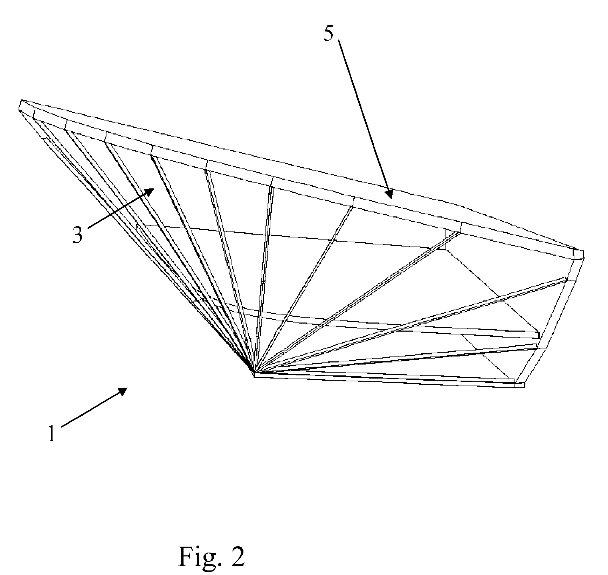

La structure architecturale 1 présente, en outre, une portion supérieure 5 essentiellement opaque aux rayons du Soleil, qui s'étend à partir de la première façade 3, délimitant vers le haut le volume éclairé 4, lui-même aussi délimité par la première façade 3. Ainsi, l'illumination, par les rayons du Soleil, du volume éclairé 4 est essentiellement réalisée au travers de la première façade 3. La première façade 3 est avantageusement la source principale d'éclairement solaire du volume éclairé 4. Dans le mode de réalisation de la figure 1, cette portion supérieure 5 essentiellement opaque est une paroi plane et horizontale, alors que dans le mode de réalisation de la figure 2, c'est une paroi plane qui s'élève en direction de la première façade 3. Avantageusement, la portion supérieure 5 essentiellement opaque crée une ombre qui occupe tout le volume éclairé 4 lors du tour de référence.

Grâce à la portion supérieure 5 essentiellement opaque, le volume éclairé 4 est donc, lors du tour de référence, privé d'illumination solaire, mais l'illumination solaire qui passe par la première façade 3 augmente à mesure qu'approche le solstice d'hiver. L'intensification de cette illumination solaire tient au fait que les rayons du Soleil rasent de moins en moins la première façade 3, mais aussi au fait que l'ombre, créée par la portion supérieure 5 essentiellement opaque, délimitant par le haut le volume éclairé 4, ainsi que par les éventuels planchers, remplit tout le volume éclairé 4 à l'occasion du tour de référence, puis diminue à mesure qu'approche le solstice d'hiver. Suivant la forme de la portion supérieure 5 essentiellement opaque, l'intégralité du volume éclairé 4 est illuminé par les rayons du Soleil à l'occasion du solstice d'hiver, ce qui permet d'augmenter par rayonnement solaire la température dans le volume éclairé 4 à cette période. A partir du solstice d'hiver, les rayons du Soleil sont, au fil des jours, de plus en plus parallèles à la première façade 3, jusqu'à aboutir à nouveau, lors du tour de référence, à une situation où les rayons sont parallèles à la première façade 3.

De façon générale, n'importe quelle rotation de la Terre sur elle-même peut faire office de tour de référence. Les rayons du Soleil n'aboutissent alors pas dans le volume éclairé 4 en traversant la première façade 3 aussi bien à partir de ce jour et jusqu'au solstice d'été suivant, que durant une période toute aussi longue après le solstice d'été.

Lorsque le tour de référence utilisé pour définir la trace du segment entre le premier point fixe et le Soleil se situe dans une période séparant deux équinoxes et comprenant le solstice d'été, le volume éclairé 4 se trouve à l'intérieur du cône que forme cette trace. Si le tour de référence est choisi dans la période séparant deux équinoxes et comprenant le solstice d'hiver, le volume éclairé 4 se situera à l'extérieur de ce cône. Bien sûr, le volume d'exploitation 2 peut se prolonger au-delà de ce volume éclairé 4.

Préférentiellement, et dans les modes de réalisations illustrés, le tour de référence correspond sensiblement au solstice d'été, c'est-à-dire le tour lors duquel le Soleil monte le plus haut dans le ciel de toute l'année. Dans ces modes de réalisation, au solstice d'été, aucun rayon de Soleil ne peut donc traverser la première façade 3. Aucun rayon de Soleil ne parviendra donc dans le volume éclairé 4.

Comme expliqué plus haut, entre le solstice d'été qui sert de tour de référence et l'équinoxe suivant, soit environ le 22 septembre, en France par exemple, l'angle du cône que forme la trace laissée par le segment imaginaire est d'autant plus ouvert que les jours passent, puisque le trajet du Soleil dans le ciel est de moins en moins haut. Les rayons du Soleil traversent donc la première façade 3 pour aboutir dans le volume éclairé 4, formé par le volume intérieur du cône de solstice d'été. Au fil des jours, les rayons du Soleil rasent donc de moins en moins la première façade 3, pour la traverser avec l'angle le plus grand lors du solstice d'hiver, puisque c'est alors que le trajet du Soleil dans le ciel est le plus bas.

L'ombre formé par la portion supérieure 5 essentiellement opaque diminue donc progressivement dans le volume éclairé 4 au fil des jours qui suivent le solstice d'été, favorisant ainsi un éclairement de plus en plus intense dans ledit volume éclairé 4.

Comme le cône tracé ne peut être à aucun moment dans le volume intérieur du cône de solstice d'été, puisque l'angle d'ouverture de ce dernier est le plus petit, les rayons de Soleil, avant ou après le solstice d'été, traversent nécessairement la première façade 3 pour aboutir dans le volume éclairé 4, qui est séparé du Soleil par la première façade 3.

Dans un mode de réalisation particulier non illustré, le jour d'un équinoxe est retenu pour définir le tour de référence, et la trace créée par le segment imaginaire sera donc le plan d'équinoxe. La première façade 3 sera donc une portion de cette trace. Dans ce mode de réalisation, la première façade 3 sera donc plane, et le volume éclairé 4 sera illuminé par les rayons du Soleil entre deux équinoxes séparés par un solstice d'hiver. Entre deux équinoxes séparés par un solstice d'été, aucun rayon de Soleil d'aboutira dans le volume éclairé 4, ce dernier étant protégé par la portion supérieure 5 essentiellement opaque.

Dans un autre mode de réalisation non illustré, la première façade 3 s'inscrit dans un cône de même axe, de même sommet, mais d'angle encore plus faible que le cône du solstice d'été. Une telle première façade 3 laisse en permanence passer les rayons du Soleil et le volume éclairé 4 ne bénéficiera pas d'au moins un jour lors duquel les rayons de Soleil ne traversent pas la première façade 3 pour l'éclairer, comme cela est le cas si le tour de référence correspond à une rotation réelle de la Terre sur elle-même. L'ombre créée par la portion supérieure 5 essentiellement opaque ainsi que les éventuels planchers dans le volume éclairé 4 ne remplit jamais complètement ce dernier.

Dans tous ces modes de réalisation, la première façade 3 s'inscrit donc dans la trace formée par ce segment, c'est-à-dire qu'elle en est une portion.

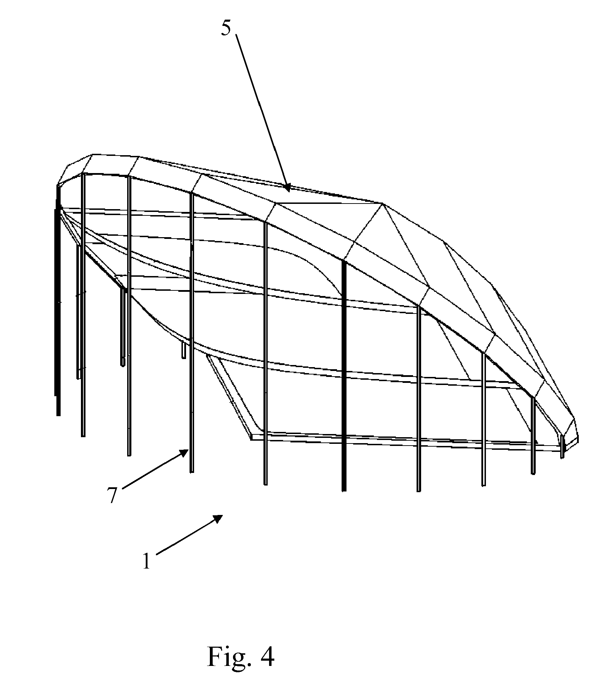

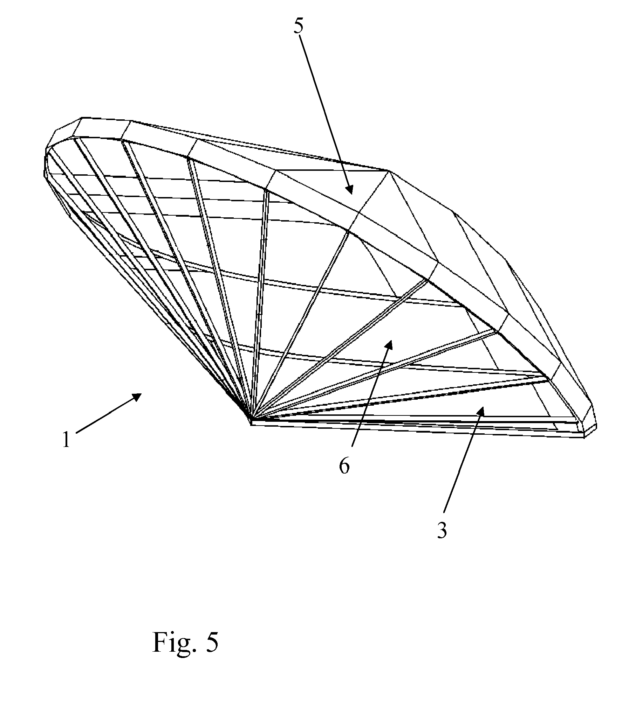

Par exemple, si la trace est un cône, la première façade 3 est une portion de ce cône, c'est-à-dire, si le premier point fixe est situé à hauteur du sol, la première façade 3 pourra être une portion délimitée par deux génératrices définies par l'intersection du cône avec le sol, et un plan perpendiculaire à l'axe du cône, comme dans les figures 4 à 6. Préférentiellement, la première façade 3 est délimitée par un plan perpendiculaire à l'axe du cône, la première façade 3 étant alors délimitée par un cercle, mais une autre forme peut être retenue. La portion supérieure 5 s'étend à partir de la première façade 3. Ainsi, la première façade 3 s'étend sur la trace laissée par le segment et prend, le cas échéant, la forme d'une portion de cône, cette portion étant délimitée par un plan perpendiculaire à l'axe de ce cône et situé à distance du sommet que constitue le premier point fixe. Préférentiellement, ces deux plans sont les mêmes, et ces deux cônes se rejoignent le long d'un cercle.

Si la trace est un plan, c'est-à-dire le plan d'équinoxe, la première façade 3 peut être n'importe quelle forme comprise dans ce plan.

La première façade 3 peut aussi être délimitée par l'ombre provoquée par d'autres bâtiments voisins, voire par les parois d'autres bâtiments ou d'autres zones de la même structure architecturale 1. La première façade 3, inscrite dans la trace laissée par le segment, peut être accolée à d'autres parois qui ne s'inscrivent pas du tout dans cette trace.

Préférentiellement, la structure architecturale 1 ne présente pas de surface opaque au rayon du Soleil qui s'étende, par rapport au volume éclairé 4, au-delà de la première façade 3. Une telle surface aurait pour effet d'empêcher les rayons du Soleil de traverser la première façade 3 et de pénétrer dans le volume éclairé 4.

La première façade 3, essentiellement transparente, est donc un élément constitutif de la structure architecturale 1. Néanmoins, le volume d'exploitation 2 n'est pas entièrement délimité par cette première façade 3. Une telle première façade 3 peut, par exemple, être apposée contre et éventuellement aussi délimitée par une façade plane et verticale, en porte à faux ou non par rapport à cette dernière.

Le premier point fixe peut avoir différentes positions par rapport au sol.

Ainsi, dans des modes de réalisation tels que ceux illustrés aux figures 1 et 4 à 6, le premier point fixe est approximativement à hauteur du sol sur lequel se trouve la structure architecturale 1, la première façade 3 s'inscrivant alors approximativement dans une portion d'un cône dont le sommet est ledit premier point fixe ou dans un plan passant par ledit premier point fixe, ladite portion étant délimitée par le plan que forme le sol. Si la trace laissée est effectivement un cône, ce dernier coupe alors le sol au niveau de deux de ses génératrices.

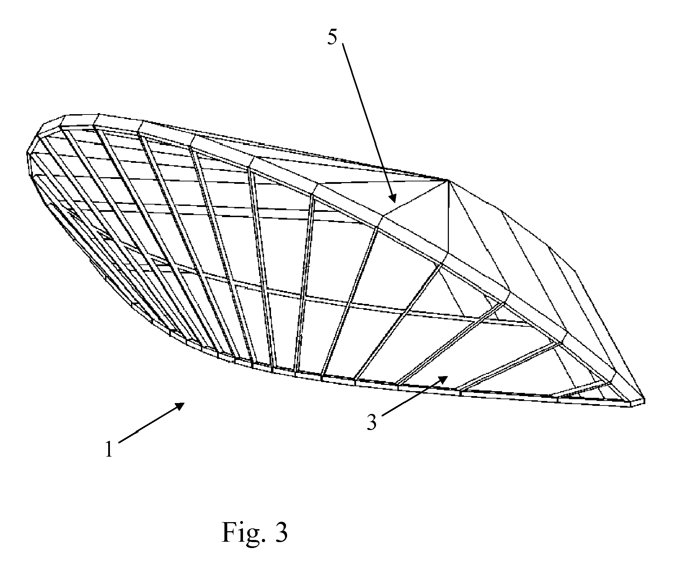

Dans d'autres modes de réalisation, tels que celui de la figure 3, le premier point fixe est sous le niveau sol sur lequel se trouve la structure architecturale 1, la première façade 3 s'inscrivant alors approximativement dans une portion d'un cône dont le sommet est ledit premier point fixe ou dans un plan passant par ledit premier point fixe, ladite portion étant délimitée par le plan que forme le sol et le premier point fixe se situant hors de cette portion. Si la trace correspond effectivement à un cône, elle coupera le sol en créant une forme parabolique, ou hyperbolique à une latitude nulle. Si la trace est le plan d'équinoxe, sa section avec le sol sera naturellement un segment de droite.

Un tel mode de réalisation présente différents avantages, tel qu'un galbe plus faible de la première façade 3, réduisant donc à la fois le coût du vitrage qui la constitue et son porte à faux, et laissant, en outre, une meilleure possibilité d'exploiter la surface au sol à l'extérieur et à l'avant de la première façade 3. En effet, la forme laissée par la première façade 3 au niveau du sol est plus mince que celle laissée si le premier point fixe est au niveau du sol. De plus, la surface au sol offerte au volume éclairé 4 est plus importante. Un autre avantage d'une configuration dans laquelle le premier point fixe se trouve sous le niveau du sol, comme dans les figures 7 à 9, est d'éviter une perte d'ensoleillement du volume éclairé 4 due à la concentration, autour du premier point fixe, de l'ombre créée par les éléments de structure de la première façade 3, classiquement sous la forme de poutrelles de bois ou de métal s'étendant, depuis le premier point fixe, comme le segment rectiligne imaginaire utilisé pour définir la forme de la première façade 3.

Dans d'autres modes de réalisations non illustrés, le premier point fixe est situé au dessus du sol sur lequel est édifiée la structure architecturale 1, la première façade 3, essentiellement transparente, s'inscrivant approximativement dans une portion d'un cône dont le sommet est ledit premier point fixe ou dans un plan passant par ledit premier point fixe. Dans ce cas, la première façade 3 pourra donc être une portion de cône s'étendant sur toute la circonférence angulaire de ce dernier, et non uniquement sur une portion angulaire. La première façade 3 peut donc être aménagée en hauteur, au niveau d'un étage d'un bâtiment, voire sur un toit.

Afin de favoriser la stabilisation de la structure architecturale 1, tant compte tenu du poids de la première façade 3 que de la prise au vent, la structure architecturale 1 présente un élément support contribuant à sa stabilité et supportant directement ou indirectement la première façade 3. En effet, lorsque la première façade 3, compte tenu de la latitude à laquelle la structure architecturale 1 est construite, s'étend au-delà du premier point fixe, elle crée un porte-à-faux par rapport à ce premier point fixe. Le bord de la première façade 3 ne repose alors plus entièrement sur un élément travaillant en compression, et la première façade 3 se retrouve comme suspendue au reste de la structure architecturale 1. Afin d'éviter que toute la structure architecturale 1 ne soit déséquilibrée, un élément support est donc disposé dans la structure architecturale 1.

Dans un premier mode de réalisation, l'élément support est aménagé dans le volume d'exploitation 2. Ainsi, l'élément support est réalisé sous la forme d'un élément d'infrastructure 6, tel qu'avec du béton, et forme au moins un plancher et/ou au moins un mur dans le volume d'exploitation 2. Cet élément d'infrastructure 6 permet aussi de créer une inertie à la fois mécanique et thermique. Le au moins un plancher ou le au moins un mur s'étend naturellement dans le volume éclairé 4. La masse de l'élément d'infrastructure 6, ainsi que son propre ancrage, équilibre celui de la première façade 3.

L'élément support consiste ainsi, dans un premier mode de réalisation, en un élément d'infrastructure 6 qui, grâce à des arches s'étendant en direction de la première façade 3, soutient cette dernière. La masse de cet élément d'infrastructure 6 réalise donc un contrepoids stabilisant toute la structure architecturale 1. L'élément d'infrastructure 6 participe ainsi à constituer les planchers, les murs, et/ou les fondations de la structure architecturale 1. Les arches peuvent être rapportées, comme des poutrelles de bois, ou faire corps avec l'élément d'infrastructure 6, sous la forme de prolongements massifs. L'élément d'infrastructure 6 est exposé, grâce à la première façade 3 et en fonction de l'ombre créée par la portion supérieure 5 essentiellement opaque, aux rayons du Soleil. Ainsi, son matériau constitutif forme, en outre, une source d'inertie thermique, qui emmagasine l'énergie thermique et la restitue lentement.

Dans un autre mode de réalisation, l'élément support est aménagé hors du volume d'exploitation 2. Ainsi, préférentiellement, l'élément support est sous la forme d'au moins un poteau 7 vertical, qui s'étend depuis une surface de support inférieure et qui supporte une partie du porte-à-faux de la première façade 3. Le poteau 7 s'étend depuis une surface de support qui peut être le sol, ou un toit au-dessus duquel la première façade 3 est aménagée. Lorsque la structure architecturale 1 présente plusieurs poteaux 7, ceux-ci peuvent aboutir sur la première façade 3 au niveau de son bord, et être régulièrement répartis le long de ce dernier.

Enfin, selon une caractéristique envisageable reprise dans les modes de réalisation illustrés aux figures 3 à 6, portion supérieure 5 essentiellement opaque prenant, par exemple, la forme d'une surface opaque munie de quelques vitrages, est disposée entre le Soleil et le volume éclairé 4, et s'inscrit au moins en partie dans la trace laissée par un segment imaginaire entre le Soleil et un deuxième point fixe par rapport au sol, lors d'un tour complet de la Terre sur elle-même, comme, par exemple, à l'occasion du solstice d'hiver, le premier point fixe et le deuxième point fixe ayant une position relative telle qu'ils définissent, avec le Soleil, un plan vertical lorsque ce dernier est à son zénith, et le second point fixe étant, en outre, le plus éloigné du Soleil.

Le volume éclairé 4 est donc délimité par la première façade 3, essentiellement transparente, ainsi que par la portion supérieure 5, essentiellement opaque. Cette dernière protège le volume éclairé 4 des rayons du Soleil, et par exemple, dans le mode de réalisation particulier où la portion supérieure 5 s'inscrit dans la trace laissée par le segment imaginaire à l'occasion du solstice d'hiver, elle délimite vers le haut le volume éclairé 4, comme dans le mode de réalisation des figures 3 à 7. Cette portion supérieure 5 garantit alors que l'intégralité du volume éclairé 4 est exposé aux rayons du Soleil au moins une fois dans l'année et crée, pendant une partie de l'année, une ombre dans le volume éclairé 4.

Ainsi, lors de ce deuxième tour de référence, la portion supérieure 5 essentiellement opaque ne créera aucune ombre dans le volume éclairé 4. Si ce deuxième tour de référence ne correspond pas au solstice d'hiver, la portion supérieure 5 ne créera aucune ombre dans le volume éclairé 4 entre le deuxième tour de référence et le solstice d'hiver, ainsi que pendant une période tout aussi longue après le solstice d'hiver. Toutefois, cette portion supérieure 5, essentiellement opaque, ne délimite pas l'ensemble de la structure architecturale 1, mais uniquement le volume éclairé 4. Le reste du volume d'exploitation 2 est préférentiellement délimité classiquement par des parois planes verticales ou horizontales.

C'est grâce à l'ombre, créée par la portion supérieure 5 et qui diminue ou qui augmente dans le volume éclairé 4 au fil des jours, ainsi que par la variation de l'illumination traversant la première façade 3, que l'ensoleillement est réduit en été, afin de réduire le besoin en air rafraîchi, et que l'ensoleillement est augmenté en hiver, afin de réduire le besoin de chauffage. En outre, et comme le montrent les figures 6 et 7, bien que le volume d'exploitation 2 soit galbé pour sa partie correspondant au volume éclairé 4, ses autres parties peuvent être rectilinéaires, et donc s'intégrer harmonieusement à une architecture urbaine classiquement rectilinéaire.

Bien entendu, l'invention n'est pas limitée aux modes de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Structure architecturale (1) comprenant un volume d'exploitation (2), **caractérisée en ce qu'**elle présente une première façade (3), essentiellement transparente aux rayons du Soleil, délimitant la face sud, si la structure architecturale (1) se trouve dans l'hémisphère nord, et inversement, d'un volume éclairé (4) faisant partie du volume d'exploitation (2), la forme de ladite première façade (3) s'inscrivant sensiblement dans la trace laissée par un segment imaginaire entre le Soleil et un premier point fixe par rapport à la Terre, lors d'un tour complet de la Terre sur elle-même, dit tour de référence.

2. Structure architecturale (1) selon la revendication 1, **caractérisée en ce que** le tour de référence correspond sensiblement au solstice d'été, c'est-à-dire le tour lors duquel le Soleil monte le plus haut dans le ciel de toute l'année.

3. Structure architecturale (1) selon l'une quelconque des revendications 1 ou 2, **caractérisée en ce que** le premier point fixe est approximativement à hauteur du sol sur lequel se trouve la structure architecturale (1), la première façade (3) s'inscrivant alors approximativement dans une portion d'un cône dont le sommet est ledit premier point fixe ou dans un plan passant par ledit premier point fixe, ladite portion étant délimitée par le plan que forme le sol.

4. Structure architecturale (1) selon l'une quelconque des revendications 1 ou 2, **caractérisée en ce que** le premier point fixe est sous le niveau sol sur lequel se trouve la structure architecturale (1), la première façade (3) s'inscrivant alors approximativement dans une portion d'un cône dont le sommet est ledit premier point fixe ou dans un plan passant par ledit premier point fixe, ladite portion étant délimitée par le plan que forme le sol et le premier point fixe se situant hors de cette portion.

5. Structure architecturale (1) selon l'une quelconque des revendications 1 ou 2, **caractérisée en ce que** le premier point fixe est situé au dessus du sol sur lequel est édifiée la structure architecturale (1), la première façade (3), essentiellement transparente, s'inscrivant approximativement dans une portion d'un cône dont le sommet est ledit premier point fixe ou dans un plan passant par ledit premier point fixe.

6. Structure architecturale (1) selon l'une quelconque des revendications 1 à 5, **caractérisée en ce qu'**elle présente un élément support contribuant à sa stabilité et supportant directement ou indirectement la première façade (3).

7. Structure architecturale (1) selon la revendication 6, **caractérisée en ce que** l'élément support est aménagé dans le volume d'exploitation (2) et **en ce que** l'élément support est réalisé sous la forme d'un élément d'infrastructure (6), tel qu'avec du béton, et forme au moins un plancher et/ou au moins un mur dans le volume d'exploitation (2).

8. Structure architecturale (1) selon la revendication 6, **caractérisée en ce que** l'élément support est aménagé hors du volume d'exploitation (2) et **en ce que** l'élément support est sous la forme d'au moins un poteau (7) vertical, qui s'étend depuis une surface de support inférieure et qui supporte une partie du porte-à-faux de la première façade (3).

9. Structure architecturale (1) selon l'une quelconque des revendications 1 à 8, **caractérisée en ce qu'**elle présente, en outre, une portion supérieure (5) essentiellement opaque, et **en ce que** ladite portion supérieure (5), prenant, par exemple, la forme d'une surface opaque munie de quelques vitrages, est disposée entre le Soleil et le volume éclairé (4), et s'inscrit au moins en partie dans la trace laissée par un segment imaginaire entre le Soleil et un deuxième point fixe par rapport au sol, lors d'un tour complet de la Terre sur elle-même, comme, par exemple, à l'occasion du solstice d'hiver, le premier point fixe et le deuxième point fixe ayant une position relative telle qu'ils définissent, avec le Soleil, un plan vertical lorsque ce dernier est à son zénith, et le second point fixe étant, en outre, le plus éloigné du Soleil.
